# EUROPEAN PATENT SPECIFICATION

(11) **EP 3 670 168 B1**
(45) Date of publication and mention of the grant of the patent: **07.12.2022**
(21) Application number: 19217299.7
(22) Date of filing: 18.12.2019
(51) Int. Cl.: B29D 30/52, B29D 30/60, B60C 1/00, B60C 7/24, B60C 11/00, B60C 11/04

(54) **REINFORCED TIRE TREAD AND METHOD OF FORMING**
VERSTÄRKTE REIFENLAUFFLÄCHE UND VERFAHREN ZUR FORMUNG
BANDE DE ROULEMENT DE PNEUMATIQUE RENFORCÉE ET PROCÉDÉ DE FORMATION

(30) Priority: 19.12.2018 US 201862781771 P; 08.10.2019 US 201916595879
(43) Date of publication of application: 24.06.2020
(73) Proprietor: The Goodyear Tire & Rubber Company, Akron, OH 44316 (US)
(72) Inventor: CHEN, Hongbing, Broadview Heights, OH 44147 (US); DYRLUND, Christopher David, Canton, OH 44705 (US); BALDAN, Adam Mark, Akron, OH 44303 (US); ROGENSKI, Elizabeth Amelia, Atwater, OH 44201 (US)
(74) Representative: Kutsch, Bernd

(56) References cited:
- EP-A1- 2 338 662
- EP-A1- 2 522 530
- EP-A1- 3 208 110
- WO-A1-2018/002487
- WO-A1-2018/043058
- DE-A1-102014 223 160
- JP-A- 2015 013 519
- US-A1- 2009 320 985
- US-A1- 2015 328 931

## Description

### Field of the Invention

The invention relates in general to tire manufacturing, and more particularly to a method for forming a reinforced composite tread and to a tire comprising a tread.

### Background of the Invention

Tire manufacturers have progressed to more complicated designs due to an advance in technology as well as a highly competitive industrial environment. In particular, tire designers seek to use multiple rubber compounds in a tire component such as the tread in order to meet customer demands. Using multiple rubber compounds per tire component can result in a huge number of compounds needed to be on hand for the various tire lines of the manufacturer. For cost and efficiency reasons, tire manufacturers seek to limit the number of compounds available, due to the extensive costs associated with each compound. Each compound typically requires the use of a banbury mixer, which involves expensive capital expenditures. Furthermore, Banbury mixers have difficulties mixing up tough or stiff rubber compounds. The compounds generated from the banbury mixers are typically shipped to the tire building plants, thus requiring additional costs for transportation. The shelf life of the compounds is finite, and if not used within a certain time period, is scrapped.

Thus, it is desired to have an improved method and apparatus which provides independent flow of two or more compounds from a single application head and allows the ratio of the two different compounds to be varied instantaneously. More particularly, it is desired to be able to make a custom tire tread directly onto a tire building machine in an efficient manner, reducing the need for multiple stations. This method can be used to make treads with the focus of improving characteristics such as rolling resistance, wet traction, and durability. One such tread is a reinforced tread.

DE 10 2014 223 160 A1 describes a method of manufacturing a tire comprising the coextrusion of a rubber strip having a layer of a first material and a layer of a second material, and creating a tread strip by arranging multiple of such rubber strips axially adjacent to each other. Another method of coextrusion of a tire component is disclosed in US 2007/ 0017615 A1.

EP 2 338 662 A1 discloses a method of forming a rubber article such as a tire tread having a radially varying rubber composition.

### Summary of the Invention

The invention relates to a method in accordance with claim 1 and to a tire in accordance with claim 13.

Dependent claims refer to preferred embodiments of the invention.

In a preferred aspect of the invention, the method for forming a composite tread for a tire comprises the steps of: forming a coextruded strip of a first and second rubber compound, wherein the first rubber compound is a tread compound and the second rubber compound is different from the first rubber compound and is a rubber compound having a relatively high wear and/or a relatively high storage modulus G' compared to the first rubber compound, and forming the composite tread from winding the coextruded strip onto a tire building drum or a green tire carcass while varying the ratio of the first rubber compound to the second rubber compound in the coextruded strip.

In another preferred aspect of the invention, the composite tread has a first and second lateral edge and wherein one or preferably both of the lateral edges of the composite tread are made from 90% to 100%, preferably from 90%, 95%, 99% or 100%, of the first rubber compound.

In another preferred aspect of the invention, the composite tread comprises one or more tread blocks, wherein the tread blocks are formed from winding said coextruded strip and wherein the coextruded strip forming the tread blocks has a volume fraction of 90% to 100%, preferably of 90%, 95%, 99% or 100%, of the first rubber compound and 0% to 10%, preferably 10%, 5%, 1% or 0%, of the second rubber compound.

In a preferred aspect of the invention, at least one or preferably all of the tread blocks have an outer layer formed from said coextruded strip wherein the coextruded strip forming the outer layer of at least one or all of the tread blocks has a volume fraction of 0% to 10%, preferably of 0%, 1%, 5% or 10%, of the first rubber compound and 90% to 100%, preferably 90%, 95%, 99% or 100%, of the second rubber compound.

In another preferred aspect of the invention, the composite tread has one or more grooves having walls, wherein at least one or preferably all of said walls of the grooves are formed from a layer of 100% of the second rubber compound or from a layer having a volume fraction of 0% to 10% such as 10%, 5%, 1% or 0% of the first rubber compound and 100% to 90% such as 100%, 99%, 95% or 90% of the second rubber compound.

In another preferred aspect of the invention, the composite tread has one or more grooves having bottoms, wherein at least one or preferably all of the bottoms of the grooves are formed from a layer of 100% of the second rubber compound or from a layer having a volume fraction of 0% to 10% such as 0%, 1%, 5% or 10% of the first rubber compound and 100% to 90% such as 100%, 99%, 95% or 90% of the second rubber compound.

In a preferred aspect of the invention, the second rubber compound has a storage modulus G', when measured at 1% strain and 100ºC according to ASTM D5289, in a range of from 15 to 60 MPa, preferably in a range of from 30 MPa to 40 MPa, 40 MPa to 60 MPa, 23 to 50 MPa, or 25 to 40 MPa.

In a preferred aspect of the invention, the storage modulus G', when measured at 1% strain and 100ºC according to ASTM D5289, of the second rubber compound is at least 5 MPa, preferably at least 10 MPa or at least 20 MPa higher than the respective storage modulus G' or the first rubber composition.

In a preferred aspect of the invention, the wear of the second rubber compound when measured in accordance with ASTM D5963-2015 is at least 20%, preferably at least 40%, higher than the wear of the first rubber compound.

In a preferred aspect of the invention, the ratio of the first rubber compound to the second rubber compound in the coextruded strip is varied by changing a ratio of a speed of a first gear pump to a second gear pump used when forming the coextruded strip.

In a preferred aspect of the invention, the coextruded strip is formed in a continuous manner and/or the coextruded strip is applied in a continuous manner to the tire building drum or the green tire carcass.

In a preferred aspect of the invention, the coextruded strip has a rectangular cross-sectional shape, a trapezoidal cross-sectional shape or an elliptical cross-sectional shape.

In a preferred aspect of the invention, the coextruded strip has a first layer consisting of the first rubber compound and a second layer consisting of the second rubber compound, the second layer having a gauge or thickness thinner than the gauge or thickness of the first layer. Preferably, the gauge or thickness of the second layer is 3-30 times thinner, preferably 5 to 15 times thinner than the gauge or thickness of the first layer.

In another preferred aspect of the invention, a tire having a tread is disclosed. The tread is formed from a continuous spiral winding of a coextruded dual layer strip of a first and second rubber compound, wherein the first rubber compound comprises silica and wherein the second compound is different from the first rubber compound and is a rubber compound having a relatively high wear and/or a relatively high storage modulus G' compared to the first rubber compound, wherein the tread comprises a first layer formed from spirally winding a continuous coextruded strip comprising 90 to 99% of the second rubber compound and 1 to 9% of the first rubber compound, wherein one or both of the lateral edges of the tread and one or more of the tread blocks of the tread are formed of 90% to 99% of the first rubber compound and 1% to 10% of the second rubber compound.

In a preferred aspect of the invention, the outline of the one or preferably both of the lateral edges and each of the one or more tread blocks are formed in the range of from 80% to 100% of the second rubber compound.

In a preferred aspect of the invention, the second rubber compound has a storage modulus G', when measured at 1% strain and 100ºC according to ASTM D5289, in a range of from 15 to 60 MPa, preferably in a range of from 30 MPa to 40 MPa, 40 MPa to 60 MPa, 23 to 50 MPa, or 25 to 40 MPa.

In another preferred aspect of the invention, a method for forming a composite tread is disclosed, the method comprising the steps of: forming a coextruded strip of a first compound and a second compound, wherein the first compound is a tread compound, and the second compound is formed from a high-wear compound, wherein the tread is formed from winding the coextruded strip onto the tire building drum or the green tire carcass while varying the ratio of the first compound to the second compound.

In another preferred aspect of the invention, a tire having a tread is disclosed. The tread is formed from a continuous spiral winding of a coextruded dual layer strip of a first and second rubber, wherein the first compound is made of silica comprising compound, and the second compound is selected for high wear, wherein the tread has a first layer formed from spirally winding a continuous coextruded strip of 90-99% of the second compound and 1-9% of the first compound, wherein the lateral edges of the tread and one or more of the tread blocks are formed of 90-99% of the first compound and 1-10% of the second compound, wherein the outline of the lateral edges and each of the one or more tread blocks are formed in the range of 80- 100% of the second compound. Preferably, wherein the second layer of compound has a thinner gauge than the first layer of compound. Preferably, the lateral edges of the tread are 99% or more of a first compound.

### Definitions

"Axial" and "axially" means the lines or directions that are parallel to the axis of rotation of the tire.

"Circumferential" means lines or directions extending along the perimeter of the surface of the annular tread perpendicular to the axial direction.

"Radial" and "radially" mean directions radially toward or away from the axis of rotation of the tire.

"Tangent delta", or "tan delta," is a ratio of the shear loss modulus, also known as G", to the shear storage modulus (G'). These properties, namely the G', G" and tan delta, characterize the viscoelastic response of a rubber test sample to a tensile deformation at a fixed frequency and temperature, measured at 100ºC.

"Laminate structure" means an unvulcanized structure made of one or more layers of tire or elastomer components such as the innerliner, sidewalls, and optional ply layer.

### Brief Description of the Drawings

The invention will be described by way of example and with reference to the accompanying drawings in which:
FIG. 1A is a perspective view of a coextruded strip of two layers, wherein the first layer is formed of a first compound and the second layer is formed of a second compound of the present invention, wherein the ratio of the first compound to the second compound is 90/10;
FIG. 1B is a perspective view of a coextruded strip wherein the first layer is 95% of a first compound and the second layer formed of a second compound, wherein the ratio of the first compound to the second compound is 95 /5;
FIG. 2 is a cross-sectional view of an encapsulated tire tread of the present invention;
FIG. 3 is a front view of an encapsulated tire tread during formation with strip lamination before vulcanization;
FIG. 4 is a front view of an encapsulated tire tread after vulcanization;
FIG. 5 is a cross-sectional view of the cured tire with an encapsulated tread;
FIG. 6 is a second embodiment of an encapsulated tread profile;
FIG. 7 is a close-up cross-sectional view of a dual compound apparatus for forming a coextruded strip onto a tire building drum; and
FIG. 8A is a perspective cutaway view of a coextrusion nozzle of the present invention, while
FIG. 8B is a side cross-sectional view of the coextrusion nozzle of FIG. 8A.

### Detailed Description of Example Embodiments of the Invention

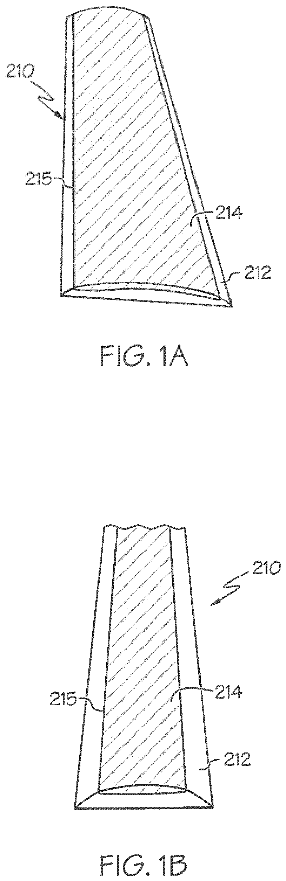

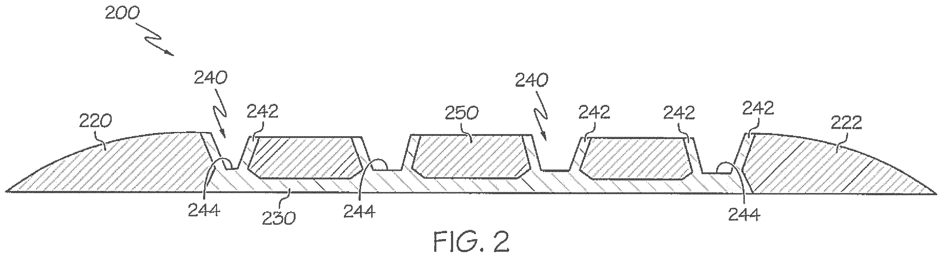

FIG. 2 illustrates a cross-sectional view of a desired reinforced tire tread profile 200 of the present invention. The tire tread 200 is formed by strip lamination, or by winding a continuous coextruded strip 210 onto a tire building drum 18 or a shaped green carcass. The continuous strip 210 is shown in FIG. 1A and is a dual layer or coextruded strip of a first layer 212 and second layer 214 of two different rubber tread compounds. The first and second layers 212, 214 are discrete, and not mixed together. The first layer 212 is formed from a first rubber compound which can be any mono cap tread compound, typically a full silica compound. The second compound is preferably a high wear rubber compound, preferably a compound having a very high G' stiffness. The combination of the tread compound made with silica and the second compound of very high stiffness results in a tire tread with the desired wet performance and low rolling resistance, while providing desired stiffness in the designated areas of the tread.

The stiffness is characterized by the storage modulus G', which are sometimes referred to as the "shear storage modulus" or "dynamic modulus," reference may be made to Science and Technology of Rubber, second edition, 1994, Academic Press, San Diego, Calif., edited by James E. Mark et al, pages 249-254.

The shear storage modulus G' values are indicative of rubber compound stiffness which can relate to tire performance.

In this application, G' is measured at 1% strain, 1 Hz and 100ºC according to ASTM D5289.

In this application, tread wear is measured in accordance with ASTM D5963 (2015) or equivalent with a force of 10 Newtons being applied.

The dynamic storage modulus (G') and also the dynamic loss modulus (G") are measurements of the viscoelastic properties of rubber compounds and may be obtained using a Rubber Process Analyzer as RPA 2000^{™} from the Alpha Technologies. For example, using the RPA 2000^{™}, a measurement at 100°C, at 1 Hz and at 1% strain is made.

In a first embodiment, the second rubber compound comprises a stiff rubber composition having a shear storage modulus G' measured at 1% strain and 100ºC according to ASTM D5289 ranging from 15 to 50 MPa.

In a more preferred embodiment, the second rubber compound comprises a rubber composition having a shear storage modulus G' measured at 1% strain and 100ºC according to ASTM D5289 ranging from 25 to 40 MPa.

In the most preferred embodiment, the second rubber compound comprises a rubber composition having a shear storage modulus G' measured at 1% strain and 100ºC according to ASTM D5289 ranging from 30 to 40 MPa.

The first and second rubber compounds of the strip are in discrete layers, and thus are not mixed together.

The coextruded strip shown in FIG. 1A has a ratio of 90% of the first compound to 10% of the second compound, while FIG. 1B illustrates a ratio of 95% of the first compound to 5% of the second compound. The invention is not limited to same, and other ratios as desired may be utilized.

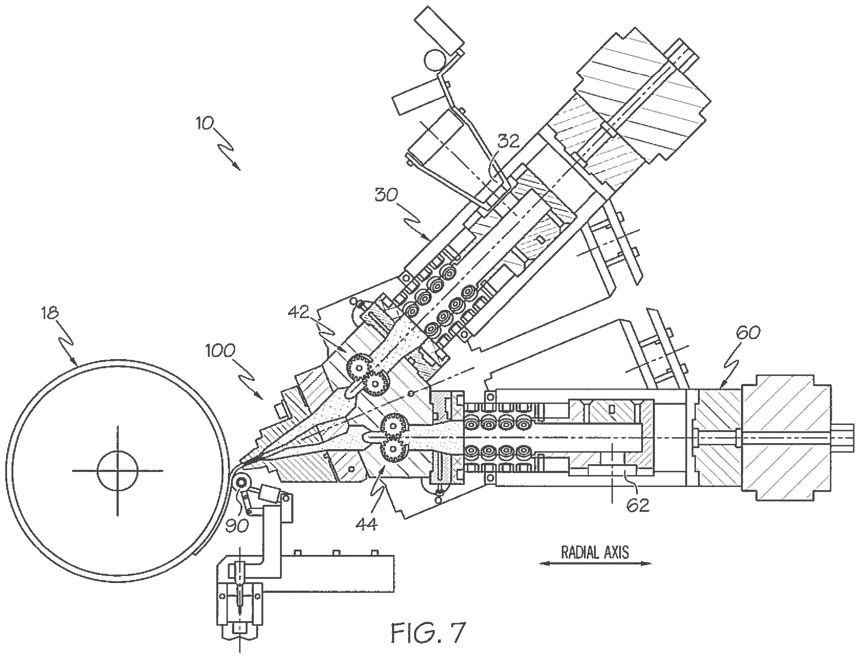

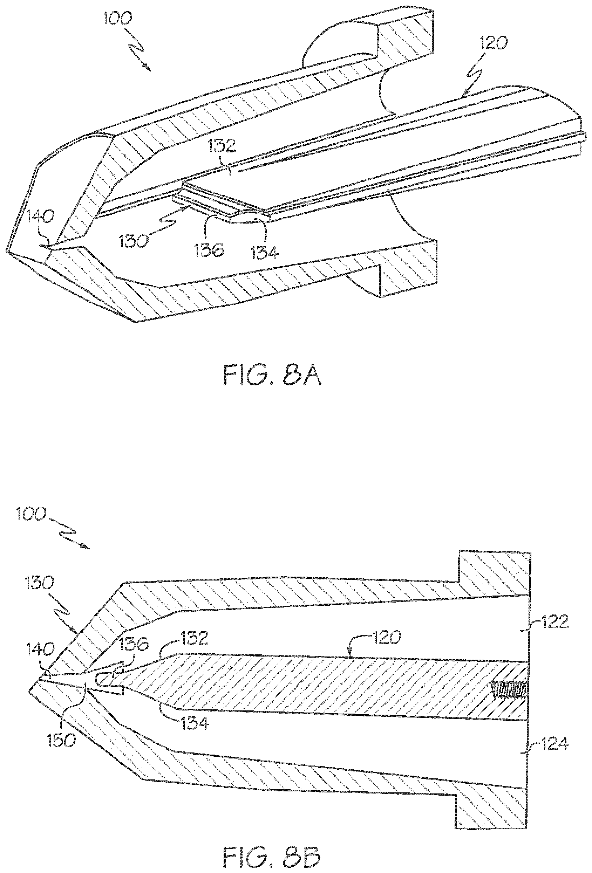

The apparatus used to form the continuous coextruded strip is described in the paragraphs below and is shown in FIGS. 7-8. The apparatus can form the coextruded strip while instantaneously varying the ratio of the first compound to the second compound.

The first layer thickness of the first compound is preferably in the range of from 0.3 mm to 2 mm, and more preferably in the range of from 0.6 to 1.2 mm.

The second layer thickness of the second compound preferably has a thickness in the range of from 0.01 mm to 0.2 mm, more preferably 0.01 mm to 0.1 mm.

The overall width of the strip 210 is preferably in the range of from 10 mm to 50 mm, more preferably 20 to 40 mm.

The coextruded strip forming apparatus 10 is used to form the tread profile 200 shown in FIG. 2 by rotating the drum 18 (or carcass) and then applying a continuous coextruded strip 210 by spirally winding the strip onto the drum 18 or carcass. The tread lateral ends 220, 222 are formed from the coextruded strip 210 having a volume ratio in the range of 90-100% compound A and 0-10% compound B. A coextruded strip is used to form each lateral end 220, 222, wherein the coextruded strip is preferably 95-100% of the first or desired tread compound and 0-5% of the second compound.

Between the lateral ends 220, 222 the tread has a base layer 230 preferably located radially inward of the tread profile, and extending between the lateral ends 220, 222. The base layer 230 is formed from a coextruded strip having a volume ratio preferably in the range of 0-10% first compound, and 90-100% of the stiff second compound or high wear tread compound. The base layer is formed by spirally winding the coextruded strips, and wherein the strips may form the first row by overlapping the coextruded strips with each other. The volume ratio of the first compound to the second compound may be varied over the base layer. The tread further includes tread blocks 250 which are formed by coextruded strips having a volume ratio in the range of 90-100% of the first read compound and 0-10% of the second high wear compound. The tread preferably has reinforced circumferential grooves 240 wherein the groove walls 242 and groove bottom 244 are formed from coextruded strips having a volume ratio in the range of 0-10% of the first compound and 90-100% high wear or high stiffness compound. There are typically one to two rows of strips to form the tread blocks by winding the coextruded strips.

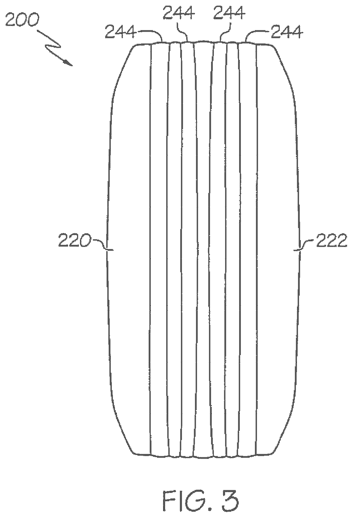

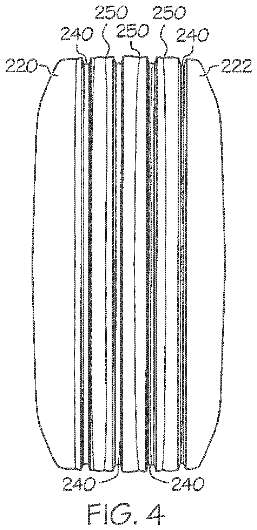

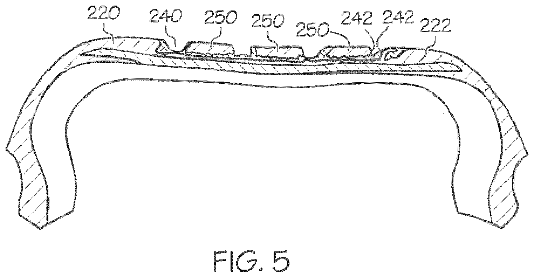

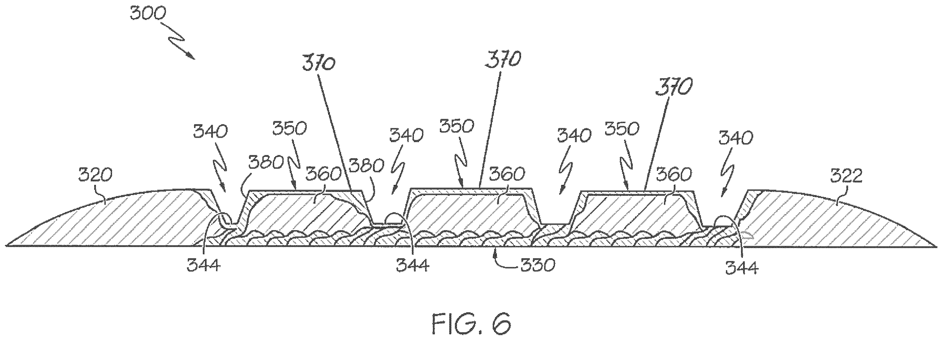

FIG. 6 illustrates a second embodiment 300 of a desired tread profile having an encapsulated tread blocks 350, while FIGS. 3-5 are illustrations of the tire before and after cure. As shown in FIG. 6, the lateral ends 320, 322 of the tread is formed from the first compound. The tread has a radially inner base layer 330 formed primarily of the high wear or highly stiff second compound. The base layer 330 is formed from a coextruded strip having a volume ratio preferably in the range of 0-10% first compound, and 90-100% of the stiff second compound or high wear tread compound. The base layer is formed by spirally winding the coextruded strips, and wherein the strips may form the first row by overlapping the coextruded strips with each other. The volume ratio of the first compound to the second compound may be varied over the high wear layer. The inner portions of the tread blocks 360 are also formed from 100% of the first tread compound. Each tread block 360 is encapsulated by an outer layer 370 and inclined walls 380 that are formed of the coextruded strip having a volume ratio in the range of 0-10% first compound, and 90-100% of the stiff second compound or high wear tread compound. A groove 340 is formed by the inclined walls 380 and groove bottom 344. The groove bottom 344 is also reinforced and formed of the coextruded strip having a volume ratio in the range of 0-10% first compound, and 90-100% of the stiff second compound or high wear tread compound. The stiff compound which outlines each groove and tread block together with the stiff inner base layer 230 provides a reinforced tread.

### Coextruded Strip Forming Apparatus

As shown in FIGS. 7-8, the coextruded strip forming apparatus 10 includes a first extruder 30 and a second extruder 60, preferably arranged in close proximity in a stacked manner. The first extruder 30 has an inlet 32 for receiving a first rubber composition A, while the second extruder 60 has an inlet 62 for receiving a second rubber composition B. Each extruder functions to warm up the rubber composition to the temperature in the range of from 80°C to 150°C, preferably 90°C to 120°C, and to masticate the rubber composition as needed. The coextruded strip forming apparatus 10 is mounted so that it can translate fore and aft in relation to a tire building machine 18.

The first compound is extruded by the first extruder 30 and then pumped by the first gear pump 42 into a nozzle 100, while at the same time the second compound is extruded by the second extruder 60 and then pumped by the second gear pump 44 into the coextrusion nozzle 100.

The coextrusion nozzle 100 has a removable insert 120 that functions to divide the nozzle into a first and second flow passageway 122, 124. The removable insert 120 is preferably rectangular in cross-sectional shape. The removable insert 120 has a distal end 130 with tapered ends 132, 134 forming a nose 136. The nose 136 is positioned adjacent the nozzle die exit 140 and spaced a few millimeters from the die exit 140. The region between the nose 136 and the die exit 140 is a low volume coextrusion zone 150 that is high pressure. In the low volume coextrusion zone 150, compound A flowstream 122 merges with compound B flowstream 124 forming two discrete layers 212, 214 joined together at an interface 215.

The volume ratio of the first compound to the second compound may be changed by varying the ratio of the speed of the first gear pump to the speed of the second gear pump. The dual coextruded strip forming apparatus 10 can adjust the speed ratios on the fly, and due to the small residence time of the coextrusion nozzle, the apparatus has a fast response to a change in the compound ratios. This is due to the low volume of the coextrusion zone.

In summary the methods and equipment used to form a coextruded strip of two different compounds can be used to create a tread reinforcement structure with the reinforcement compound in targeted areas to provide extra stiffness where it is most effective without replacing large amounts of the main compound and compromising rolling resistance. The tread may also be reinforced in a different way, by increasing the ratio of reinforcement compound across the rib to create a stiffness gradient, as an alternative to a hard change from one compound to the other. This type of distribution would be impossible with a conventional extruder.

## Claims

1. A method for forming a composite tread (200, 300) for a tire, the method comprising the steps of:
forming a coextruded strip (210) of a first and second rubber compound, wherein the first rubber compound is a tread compound and the second rubber compound is different from the first rubber compound and is a rubber compound having a relatively high wear and/or a relatively high storage modulus G' compared to the first rubber compound, the method being **characterized by**
forming the composite tread (200, 300) from winding the coextruded strip (210) onto a tire building drum (18) or a green tire carcass while varying the ratio of the first rubber compound to the second rubber compound in the coextruded strip (210).

2. The method of claim 1 wherein the composite tread (200, 300) has a first and second lateral edge (220, 222, 320, 322) and wherein one or both of the lateral edges (220, 222, 320, 322) of the composite tread are made from 90% to 100%, preferably from 90%, 95% or 100%, of the first rubber compound.

3. The method of claim 1 or 2 wherein the composite tread (200) comprises one or more tread blocks (250, 350), wherein the tread blocks (250, 350) are formed from winding said coextruded strip (210) and wherein the coextruded strip (210) forming the tread blocks (250, 350) has a volume fraction of 90% to 100%, preferably of 90%, 95% or 100%, of the first rubber compound and 0% to 10%, preferably 10%, 5% or 0%, of the second rubber compound.

4. The method of claim 3 wherein at least one or all of the tread blocks (350) have an outer layer (370) formed from said coextruded strip (210) and wherein the coextruded strip (210) forming the outer layer (370) of at least one or all of the tread blocks has a volume fraction of 0% to 10%, preferably of 0%, 5% or 10%, of the first rubber compound and 90% to 100%, preferably 90%, 95% or 100%, of the second rubber compound.

5. The method of at least one of the previous claims wherein the composite tread (200, 300) has one or more grooves (240, 340) having walls (242, 380), wherein at least one or all said walls (242, 380) of the grooves (240, 340) are formed from a layer of 100% of the second rubber compound or from a layer having a volume fraction of 0% to 10% of the first rubber compound and 100% to 90% of the second rubber compound.

6. The method of at least one of the previous claims wherein the composite tread (200, 300) has one or more grooves (240, 340) having bottoms (244, 344), wherein at least one or all the bottoms (244, 344) of the grooves (240, 340) are formed from a layer of 100% of the second rubber compound or from a layer having a volume fraction of 0% to 10% of the first rubber compound and 100% to 90% of the second rubber compound.

7. The method of at least one of the previous claims wherein the second rubber compound has a storage modulus G', when measured at 1% strain and 100ºC according to ASTM D5289, in a range of from 15 to 60 MPa, preferably in a range of from 30 MPa to 40 MPa, 40 MPa to 60 MPa, 23 to 50 MPa, or 25 to 40 MPa.

8. The method of at least one of the previous claims wherein the storage modulus G', when measured at 1% strain and 100ºC according to ASTM D5289, of the second rubber compound is at least 5 MPa, preferably at least 10 MPa or at least 20 MPa higher than the respective storage modulus G' or the first rubber composition.

9. The method of at least one of the previous claims wherein the wear of the second rubber compound when measured in accordance with ASTM D5963-2015 is at least 20%, preferably at least 40%, higher than the wear of the first rubber compound.

10. The method of at least one of the previous claims wherein the ratio of the first rubber compound to the second rubber compound in the coextruded strip (210) is varied by changing a ratio of a speed of a first gear pump (42) to a second gear pump (44) used when forming the coextruded strip (210).

11. The method of at least one of the previous claims wherein the coextruded strip (210) is formed in a continuous manner and/or wherein the coextruded strip (210) is applied in a continuous manner to the tire building drum (18) or the green tire carcass.

12. The method of at least one of the previous claims wherein the coextruded strip (210) has a rectangular cross-sectional shape or a trapezoidal cross-sectional shape or an elliptical cross-sectional shape and/or wherein the coextruded strip (210) has a first layer (212) consisting of the first rubber compound and a second layer (214) consisting of the second rubber compound, the second layer (214) having a gauge or thickness thinner than the gauge or thickness of the first layer (212).

13. A tire having a tread, wherein the tread (200, 300) is formed from a continuous spiral winding of a coextruded dual layer strip (210) of a first and second rubber compound, wherein the first rubber compound comprises silica and wherein the second compound is different from the first rubber compound and is a rubber compound having a relatively high wear and/or a relatively high storage modulus G' compared to the first rubber compound, wherein the tread (200, 300) comprises a first layer (212) formed from spirally winding a continuous coextruded strip comprising 90 to 99% of the second rubber compound and 1 to 9% of the first rubber compound, wherein one or both of the lateral edges (220, 222, 320, 322) of the tread (200, 300) and one or more of the tread blocks (250, 350) of the tread (200, 300) are formed of 90% to 99% of the first rubber compound and 1% to 10% of the second rubber compound.

14. The tire of claim 13, wherein the outline of the one or both of the lateral edges (220, 222, 320, 322) and each of the one or more tread blocks (250, 350) are formed in the range of from 80% to 100% of the second rubber compound.

15. The tire of claim 13 or 14 the second rubber compound has a storage modulus G', when measured at 1% strain and 100ºC according to ASTM D5289, in a range of from 15 to 60 MPa, preferably in a range of from 30 MPa to 40 MPa, 40 MPa to 60 MPa, 23 to 50 MPa, or 25 to 40 MPa.

## Patentansprüche

1. Verfahren zum Ausbilden einer Verbundlauffläche (200, 300) für einen Reifen, das Verfahren umfassend die Schritte:
Ausbilden eines koextrudierten Streifens (210) aus einer ersten und einer zweiten Kautschukverbindung, wobei die erste Kautschukverbindung eine Laufflächenverbindung ist und die zweite Kautschukverbindung sich von der ersten Kautschukverbindung unterscheidet und eine Kautschukverbindung ist, die einen relativ hohen Verschleiß aufweist, und/oder einen relativ hohen Speichermodul G' im Vergleich zu der ersten Kautschukverbindung aufweist, das Verfahren
**gekennzeichnet durch**
Ausbilden der Verbundlauffläche (200, 300) von einem Aufwickeln des koextrudierten Streifens (210) auf eine Reifenbautrommel (18) oder einer Reifenrohlingkarkasse unter Variieren des Verhältnisses der ersten Kautschukverbindung zu der zweiten Kautschukverbindung in dem koextrudierten Streifen (210).

2. Verfahren nach Anspruch 1, wobei die Verbundlauffläche (200, 300) eine erste und eine zweite Seitenkante (220, 222, 320, 322) aufweist und wobei eine oder beide der Seitenkanten (220, 222, 320, 322) der Verbundlauffläche aus 90 % bis 100 %, vorzugsweise aus 90 %, 95 % oder 100 % der ersten Kautschukverbindung gemacht sind.

3. Verfahren nach Anspruch 1 oder 2, wobei die Verbundlauffläche (200) einen oder mehrere Laufflächenblöcke (250, 350) umfasst, wobei die Laufflächenblöcke (250, 350) von dem Aufwickeln des koextrudierten Streifens (210) ausgebildet sind und wobei der koextrudierte Streifen (210), der die Laufflächenblöcke (250, 350) ausbildet, einen Volumenanteil von 90 % bis 100 %, vorzugsweise von 90 %, 95 % oder 100 %, der ersten Kautschukverbindung und 0 % bis 10 %, vorzugsweise 10 %, 5 % oder 0 % der zweiten Kautschukverbindung aufweist.

4. Verfahren nach Anspruch 3, wobei mindestens einer oder alle Laufflächenblöcke (350) eine äußere Schicht (370) aufweisen, die aus dem koextrudierten Streifen (210) ausgebildet ist, und wobei der koextrudierte Streifen (210), der die äußere Schicht (370) von mindestens einer oder allen der Laufflächenblöcke ausbildet, einen Volumenanteil von 0 % bis 10 %, vorzugsweise von 0 %, 5 % oder 10 %, der ersten Kautschukverbindung und 90 % bis 100 %, vorzugsweise 90 %, 95 % oder 100 %, der zweiten Kautschukverbindung aufweist.

5. Verfahren nach mindestens einem der vorstehenden Ansprüche, wobei die Verbundlauffläche (200, 300) eine oder mehrere Rillen (240, 340) aufweist, die Wände (242, 380) aufweisen, wobei mindestens eine oder alle Wände (242, 380) der Rillen (240, 340) aus einer Schicht von 100 % der zweiten Kautschukverbindung oder aus einer Schicht, die einen Volumenanteil von 0 % bis 10 % der ersten Kautschukverbindung und 100 % bis 90 % der zweiten Kautschukverbindung ausgebildet ist.

6. Verfahren nach mindestens einem der vorstehenden Ansprüche, wobei die Verbundlauffläche (200, 300) eine oder mehrere Rillen (240, 340) aufweist, die Böden (244, 344) aufweisen, wobei mindestens einer oder alle der Böden (244, 344) der Rillen (240, 340) aus einer Schicht von 100 % der zweiten Kautschukverbindung oder aus einer Schicht, die einen Volumenanteil von 0 % bis 10 % der ersten Kautschukverbindung und 100 % bis 90 % der zweiten Kautschukverbindung ausgebildet sind.

7. Verfahren nach mindestens einem der vorstehenden Ansprüche, wobei die zweite Kautschukverbindung einen Speichermodul G', wenn bei 1 % Dehnung und 100 °C gemäß ASTM D5289 gemessen, in einem Bereich von 15 bis 60 MPa, vorzugsweise in einem Bereich von 30 MPa bis 40 MPa, 40 MPa bis 60 MPa, 23 bis 50 MPa oder 25 bis 40 MPa aufweist.

8. Verfahren nach mindestens einem der vorstehenden Ansprüche, wobei der Speichermodul G', wenn bei 1 % Dehnung und 100 °C gemäß ASTM D5289 gemessen, der zweiten Kautschukverbindung mindestens 5 MPa, vorzugsweise mindestens 10 MPa oder mindestens 20 MPa höher als der jeweilige Speichermodul G' oder die erste Kautschukzusammensetzung ist.

9. Verfahren nach mindestens einem der vorstehenden Ansprüche, wobei der Verschleiß der zweiten Kautschukverbindung, wenn gemäß ASTM D5963-2015 gemessen, mindestens 20 %, vorzugsweise mindestens 40 %, höher als der Verschleiß der ersten Kautschukverbindung ist.

10. Verfahren nach mindestens einem der vorstehenden Ansprüche, wobei das Verhältnis der ersten Kautschukverbindung zu der zweiten Kautschukverbindung in dem koextrudierten Streifen (210) verändert wird, indem ein Verhältnis einer Geschwindigkeit einer ersten Zahnradpumpe (42) zu einer zweiten Zahnradpumpe (44) variiert wird, die bei dem Ausbilden des koextrudierten Streifens (210) verwendet wird.

11. Verfahren nach mindestens einem der vorstehenden Ansprüche, wobei der koextrudierte Streifen (210) auf eine kontinuierliche Weise ausgebildet wird und/oder wobei der koextrudierte Streifen (210) auf eine koextrudierte Weise auf die Reifenbautrommel (18) oder die Reifenrohlingkarkasse aufgebracht wird.

12. Verfahren nach mindestens einem der vorstehenden Ansprüche, wobei der koextrudierte Streifen (210) eine rechteckige Querschnittsform oder eine trapezförmige Querschnittsform oder eine elliptische Querschnittsform aufweist und/oder wobei der koextrudierte Streifen (210) eine erste Schicht (212) aufweist, die aus der ersten Kautschukverbindung besteht, und eine zweite Schicht (214), die aus der zweiten Kautschukverbindung besteht, wobei die zweite Schicht (214) eine Breite oder Dicke aufweist, die dünner als die Breite oder die Dicke der ersten Schicht (212) ist.

13. Reifen, der eine Lauffläche aufweist, wobei die Lauffläche (200, 300) aus einer kontinuierlichen spiralförmigen Wicklung eines koextrudierten zweilagigen Streifens (210) aus einer ersten und einer zweiten Kautschukverbindung ausgebildet ist, wobei die erste Kautschukverbindung Siliciumdioxid umfasst und wobei die zweite Verbindung sich von der ersten Kautschukverbindung unterscheidet und eine Kautschukverbindung ist, die einen relativ hohen Verschleiß und/oder einen relativ hohen Speichermodul G' im Vergleich zu der ersten Kautschukverbindung aufweist, wobei die Lauffläche (200, 300) eine erste Schicht (212) umfasst, die von einem spiralförmigen Aufwickeln eines kontinuierlichen koextrudierten Streifens ausgebildet ist, umfassend 90 bis 99 % der zweiten Kautschukverbindung und 1 bis 9 % der ersten Kautschukverbindung, wobei eine oder beide der Seitenkanten (220, 222, 320, 322) der Lauffläche (200, 300) und einer oder mehrere der Laufflächenblöcke (250, 350) der Lauffläche (200, 300) aus 90 % bis 99 % der ersten Kautschukverbindung und 1 % bis 10 % der zweiten Kautschukverbindung ausgebildet sind.

14. Reifen nach Anspruch 13, wobei der Umriss von dem einen oder beiden der Seitenkanten (220, 222, 320, 322) und jeder des einen oder der mehreren Laufflächenblöcken (250, 350) in dem Bereich von 80 % bis 100 % der zweiten Kautschukverbindung ausgebildet sind.

15. Reifen nach Anspruch 13 oder 14, wobei die zweite Kautschukverbindung einen Speichermodul G', wenn bei 1 % Dehnung und 100 °C gemäß ASTM D5289 gemessen, in einem Bereich von 15 bis 60 MPa, vorzugsweise in einem Bereich von 30 MPa bis 40 MPa, 40 MPa bis 60 MPa, 23 bis 50 MPa oder 25 bis 40 MPa aufweist.

## Revendications

1. Procédé destiné à la confection d'une bande de roulement composite (200, 300) pour un bandage pneumatique, le procédé comprenant les étapes dans lesquelles :
on confectionne une bande coextrudée (210) qui est constituée par un premier et par un deuxième composé à base de caoutchouc ; dans lequel le premier composé à base de caoutchouc représente un composé destiné à une bande de roulement et le deuxième composé à base de caoutchouc est différent du premier composé à base de caoutchouc et représente un composé à base de caoutchouc qui possède une usure relativement élevée et/ou un module de stockage G' relativement élevé par rapport à celle et/ou celui du premier composé à base de caoutchouc, le procédé étant **caractérisé par** le fait de :
confectionner la bande de roulement composite (200, 300) à partir d'un enroulement de la bande coextrudée (210) sur un tambour de confection de bandage pneumatique (18) ou sur une carcasse de bandage pneumatique à l'état non vulcanisé alors que l'on fait varier le rapport existant entre le premier composé à base de caoutchouc et le deuxième composé à base de caoutchouc dans la bande coextrudée (210).

2. Procédé conformément à la revendication 1, dans lequel la bande de roulement composite (200, 300) possède un premier et un deuxième bord latéral (220, 222, 320, 322) ; et dans lequel au moins un des bords latéraux (220, 222, 320, 322) ou les deux, de la bande de roulement composite (250) est/sont réalisé(s) à partir de 90 % à 100 %, de préférence à partir de 90 %, de 95 % ou de 100 % du premier composé à base de caoutchouc.

3. Procédé conformément à la revendication 1 ou 2, dans lequel la bande de roulement composite (200) comprend un ou plusieurs pavés de gomme (250, 350) ; dans lequel on obtient les pavés de gomme (250, 350) à partir d'un enroulement de ladite bande coextrudée (210); et dans lequel la bande coextrudée (210) qui permet d'obtenir les pavés de gomme (250, 350) possède une fraction volumique qui correspond à une valeur de 90 % à 100 %, de préférence qui correspond à 90 %, à 95 % ou à 100 % du premier composé à base de caoutchouc et qui correspond à une valeur de 0 % à 10 %, de préférence qui correspond à 10 %, à 5 % ou à 0 % du deuxième composé à base de caoutchouc.

4. Procédé conformément à la revendication 3, dans lequel un pavé de gomme (350) ou la totalité de ces derniers possède(nt) une couche externe (370) que l'on obtient à partir de ladite bande coextrudée (210); et dans lequel la bande coextrudée (210) qui permet d'obtenir la couche externe (370) d'au moins un pavé de gomme ou de la totalité de ces derniers possède une fraction volumique qui correspond à une valeur de 0 % à 10 %, de préférence qui correspond à 0 %, à 5 % ou à 10 % du premier composé à base de caoutchouc et qui correspond à une valeur de 90 % à 100 %, de préférence qui correspond à 90 %, à 95 % ou à 100 % du deuxième composé à base de caoutchouc.

5. Procédé conformément à au moins une des revendications précédentes, dans lequel la bande de roulement composite (200, 300) possède une ou plusieurs rainures (240, 340) qui comportent des parois (242, 380) ; dans lequel on obtient au moins une desdites parois (242, 380) ou la totalité de ces dernières, des rainures (240, 340), à partir d'une couche constituée de 100 % du deuxième composé à base de caoutchouc ou à partir d'une couche qui possède une fraction volumique qui correspond à une valeur de 0 % à 10 % du premier composé à base de caoutchouc et de 100 % à 90 % du deuxième composé à base de caoutchouc.

6. Procédé conformément à au moins une des revendications précédentes, dans lequel la bande de roulement composite (200, 300) possède une ou plusieurs rainures (240, 340) qui comportent des bases (244, 344) ; dans lequel on obtient au moins une desdites bases (244, 344) ou la totalité de ces dernières, des rainures (240, 340) à partir d'une couche constituée de 100 % du deuxième composé à base de caoutchouc ou à partir d'une couche qui possède une fraction volumique qui correspond à une valeur de 0 % à 10 % du premier composé à base de caoutchouc et de 100 % à 90 % du deuxième composé à base de caoutchouc.

7. Procédé conformément à au moins une des revendications précédentes, dans lequel le deuxième composé à base de caoutchouc possède un module de stockage G', lorsqu'on le mesure à une déformation de 1 % et à une température de 100 °C en conformité avec la norme ASTM D5289, qui se situe dans une plage allant de 15 à 60 MPa, de préférence dans une plage allant de 30 MPa à 40 MPa, de 40 MPa à 60 MPa, de 23 MPa à 50 MPa, ou de 25 MPa à 40 MPa.

8. Procédé conformément à au moins une des revendications précédentes, dans lequel le module de stockage G', lorsqu'on le mesure à une déformation de 1 % et à une température de 100 °C en conformité avec la norme ASTM D5289, du deuxième composé à base de caoutchouc représente une valeur supérieure à concurrence d'au moins 5 MPa, de préférence d'au moins 10 MPa ou d'au moins 20 MPa au module de stockage respectif G' de la première composition à base de caoutchouc.

9. Procédé conformément à au moins une des revendications précédentes, dans lequel l'usure du deuxième composé à base de caoutchouc, lorsqu'on la mesure en conformité avec la norme ASTM D5963-2015 est supérieure à concurrence d'au moins 20 %, de préférence d'au moins 40 %, à l'usure du premier composé à base de caoutchouc.

10. Procédé conformément à au moins une des revendications précédentes, dans lequel on fait varier le rapport entre le premier composé à base de caoutchouc et le deuxième composé à base de caoutchouc dans la bande coextrudée (210) en modifiant un rapport entre la vitesse d'une première pompe à engrenages (42) et celle d'une deuxième pompe à engrenages (44) que l'on utilise au cours de la confection de la bande coextrudée (210).

11. Procédé conformément à au moins une des revendications précédentes, dans lequel on confectionne la bande coextrudée (210) en continu et/ou dans lequel on applique la bande coextrudée (210) en continu sur le tambour de confection de bandage pneumatique (18) ou sur la carcasse du bandage pneumatique à l'état non vulcanisé.

12. Procédé conformément à au moins une des revendications précédentes, dans lequel la bande coextrudée (210) possède une configuration de forme rectangulaire en section transversale ou une configuration de forme trapézoïdale en section transversale ou une configuration de forme elliptique en section transversale et/ou dans lequel la bande coextrudée (210) possède une première couche (212) qui est constituée par le premier composé à base de caoutchouc et une deuxième couche (214) qui est constituée par le deuxième composé à base de caoutchouc, la deuxième couche (214) possédant un calibre ou une épaisseur qui est inférieur au calibre ou à l'épaisseur de la première couche (212).

13. Bandage pneumatique qui possède une bande de roulement, dans lequel on obtient la bande de roulement (200, 300) à partir d'un enroulement en spirale et en continu d'une bande coextrudée (210) du type à double couche, constituée par un premier et par un deuxième composé à base de caoutchouc ; dans lequel le premier composé à base de caoutchouc comprend de la silice et dans lequel le deuxième composé ou est différent du premier composé à base de caoutchouc et représente un composé à base de caoutchouc qui possède une usure relativement élevée et/ou un module de stockage G' relativement élevé par rapport à celle et/ou celui du premier composé à base de caoutchouc ; dans lequel la bande de roulement (200, 300) comprend une première couche (212) que l'on obtient à partir d'un enroulement en spirale d'une bande qui a été coextrudée en continu, qui comprend de 90 à 99 % du deuxième composé à base de caoutchouc et de 1 à 9 % du premier composé à base de caoutchouc ; dans lequel un des deux bords latéraux (220, 222, 320, 322) ou les deux bords latéraux de la bande de roulement (200, 300) et un ou plusieurs pavés de gomme (250, 350) de la bande de roulement (200, 300) est/dont réalisé(s) à partir de 90 à 99 % du premier composé à base de caoutchouc et de 1 à 10 % du deuxième composé à base de caoutchouc.

14. Bandage pneumatique conformément à la revendication 13, dans lequel le contour d'un des bords latéraux ou des deux bords latéraux (220, 222, 320, 322) et de chacun desdits un ou plusieurs pavés de gomme (250, 350) est/sont réalisé(s) à partir du deuxième composé à base de caoutchouc à concurrence d'une valeur qui se situe dans la plage allant de 80 % à 100 %.

15. Bandage pneumatique conformément à la revendication 13 ou 14, dans lequel le deuxième composé à base de caoutchouc possède un module de stockage G', lorsqu'on le mesure à une déformation de 1 % et à une température de 100 °C en conformité avec la norme ASTM D5289, qui se situe dans une plage allant de 15 à 60 MPa, de préférence dans une plage allant de 30 MPa à 40 MPa, de 40 MPa à 60 MPa, de 23 MPa à 50 MPa, ou de 25 MPa à 40 MPa.
